# EUROPEAN PATENT APPLICATION

(11) **EP 4 822 921 A1**
(43) Date of publication of application: **14.10.2026**
(21) Application number: 24900209.8
(22) Date of filing: 30.07.2024
(51) Int. Cl.: H02G 1/10, E02F 3/88, E02F 5/10

(54) **METHOD FOR LAYING SUBAQUEOUS CABLE, AND SUBAQUEOUS CABLE LINE**

(30) Priority: 08.12.2023 JP 2023207668
(71) Applicant: Sumitomo Electric Industries, Ltd., Osaka-shi, Osaka 541-0041 (JP)
(72) Inventor: MIYAZAKI Takuya, Osaka-shi, Osaka 541-0041 (JP); HASEGAWA Mamoru, Osaka-shi, Osaka 541-0041 (JP); KIMURA Hiroyuki, Osaka-shi, Osaka 541-0041 (JP)
(74) Representative: Grünecker Patent- und Rechtsanwälte PartG mbB
(86) International application number: PCT/JP2024/027082
(87) International publication number: WO 2025/120911

(57) **Abstract**

An underwater cable laying method includes a step of laying, on a water bottom, an underwater cable mounted on a ship. The step of laying the underwater cable includes a step of drawing out the underwater cable from the ship in such a manner that a departure angle of the underwater cable with respect to a water surface is 80° or more and 90° or less, and a step of inserting the drawn-out underwater cable through the inside of a cable guide pipe suspended in water from the ship and disposing the underwater cable at a touchdown point for the underwater cable. The cable guide pipe is connected to a wire extending from the ship into the water without being connected to an excavator that excavates the water bottom.

## Description

### TECHNICAL FIELD

The present disclosure relates to an underwater cable laying method and an underwater cable line.

The present application claims priority to Japanese Patent Application No. 2023-207668 filed on December 8, 2023, the entire contents of which are incorporated herein by reference.

### BACKGROUND ART

PTL 1 discloses an elongate body burying apparatus that includes a ship navigating in water, a cable guide pipe disposed in water, and a burying machine disposed on a water bottom. An elongate body such as a power cable drawn out from a ship is inserted through the cable guide pipe. The cable guide pipe is connected to the burying machine. The burying machine excavates the water bottom to form a burying trench. The elongate body inserted through the cable guide pipe is inserted through the burying machine and is disposed in the burying trench.

### CITATION LIST

### PATENT LITERATURE

PTL 1: Japanese Patent Laying-Open No. H08-246497

### SUMMARY OF INVENTION

An underwater cable laying method according to the present disclosure includes a step of laying, on a water bottom, an underwater cable mounted on a ship. The step of laying the underwater cable includes a step of drawing out the underwater cable from the ship in such a manner that a departure angle of the underwater cable with respect to a water surface is 80° or more and 90° or less, and a step of inserting the drawn-out underwater cable through the inside of a cable guide pipe suspended in water from the ship and disposing the underwater cable at a touchdown point for the underwater cable. The cable guide pipe is connected to a wire extending from the ship into the water without being connected to an excavator that excavates the water bottom.

### BRIEF DESCRIPTION OF DRAWINGS

[Fig. 1] Fig. 1 is a schematic view illustrating an underwater cable laying method according to a first embodiment.
[Fig. 2] Fig. 2 is an enlarged view of a region A of Fig. 1.
[Fig. 3] Fig. 3 is a schematic perspective view illustrating a cylindrical cage-shaped member that constitutes a cable guide pipe to be used in the underwater cable laying method according to the first embodiment.
[Fig. 4] Fig. 4 is a schematic front view illustrating the cylindrical cage-shaped member of Fig. 3.
[Fig. 5] Fig. 5 is a schematic top view illustrating a state in which the cylindrical cage-shaped members of Fig. 3 are arranged in series.
[Fig. 6] Fig. 6 is a schematic view illustrating a ship navigation route in the underwater cable laying method according to the first embodiment.
[Fig. 7] Fig. 7 is a schematic top view illustrating an underwater cable line according to the first embodiment.
[Fig. 8] Fig. 8 is a schematic top view illustrating another example of the underwater cable line according to the first embodiment.
[Fig. 9] Fig. 9 is a schematic diagram illustrating an underwater cable laying method according to a second embodiment.
[Fig. 10] Fig. 10 is a schematic diagram illustrating an underwater cable laying method according to a third embodiment.

### DETAILED DESCRIPTION

### [Problem to be Solved by the Present Disclosure]

In PTL 1, the elongate body is sequentially inserted through the cable guide pipe and the burying machine to which the cable guide pipe is connected and is disposed in the burying trench. To prevent an extreme bending stress from acting on the elongate body, the cable guide pipe is connected to the burying machine at an angle. Thus, a departure angle of the elongate body with respect to the water surface becomes small. The departure angle is an angle that is formed between the elongate body and the water surface and is closer to the ship. Since the departure angle is small, it is difficult to construct a line with a small bending radius by bending and laying the elongate body.

An object of the present disclosure is to provide an underwater cable laying method capable of constructing an underwater cable line having a bent portion with a small bending radius.

### [Advantageous Effect of the Present Disclosure]

According to the underwater cable laying method of the present disclosure, it is possible to construct an underwater cable line having a bent portion with a small bending radius.

### [Description of Embodiments of the Present Disclosure]

Firstly, embodiments of the present disclosure will be described.
(1) An underwater cable laying method according to an aspect of the present disclosure includes a step of laying, on a water bottom, an underwater cable mounted on a ship. The step of laying the underwater cable includes a step of drawing out the underwater cable from the ship in such a manner that a departure angle of the underwater cable with respect to a water surface is 80° or more and 90° or less, and a step of inserting the drawn-out underwater cable through the inside of a cable guide pipe suspended in water from the ship and disposing the underwater cable at a touchdown point for the underwater cable. The cable guide pipe is connected to a wire extending from the ship into the water without being connected to an excavator that excavates the water bottom.
   According to the underwater cable laying method of the above (1), since the cable guide pipe is not connected to the excavator, the departure angle can be 80° or more. The departure angle is an angle that is formed between the underwater cable and the water surface and is closer to the stern. If the departure angle is 80° or more, the touchdown point for the underwater cable can be brought closer to the stern. Therefore, according to the underwater cable laying method of the above (1), it is possible to easily construct an underwater cable line having a bent portion with a small bending radius. Therefore, the underwater cable laying method of the above (1) is excellent in laying workability, and thereby it is possible to reduce the cost. If the departure angle is 90° or less, the bending radius of the drawn-out underwater cable can be made equal to or larger than an allowable bending radius, and the underwater cable is less likely to twist or kink. Furthermore, when the underwater cable is introduced into the water, the underwater cable is less likely to contact the stern. Therefore, according to the underwater cable laying method of the above (1), it is possible to easily lay the underwater cable.
(2) In the underwater cable laying method according to the above (1), the cable guide pipe may be connected to the wire in such a manner that a distance between the stern and the touchdown point is 20 m or less when the ship is viewed from above.
   According to the underwater cable laying method of the above (2), it is possible to easily construct an underwater cable line having a bent portion with a small bending radius.
(3) The underwater cable laying method according to the above (1) or (2) may further include a step of navigating the ship along a navigation route with a turning radius of 50 m or less.
   According to the underwater cable laying method of the above (3), it is possible to easily construct an underwater cable line having a bent portion with a small bending radius.
(4) In the underwater cable laying method according to any one of the above (1) to (3), the step of laying the underwater cable may further include a step of excavating the water bottom by using the excavator suspended in the water from the ship. In the step of laying the underwater cable, the underwater cable is laid at a location excavated by the excavator. The excavator is equipped with a sand pump.
   An excavator equipped with a sand pump can suck up soil on the water bottom and discharge the sucked soil. Therefore, according to the underwater cable laying method of the above (4), it is possible to continuously perform the step of forming a trench by excavating the water bottom, the step of laying the underwater cable in the trench at a touchdown point for the underwater cable, and the step of burying the underwater cable. In other words, according to the underwater cable laying method of the above (4), while a trench is being formed by excavating the water bottom, the underwater cable can be disposed at the touchdown point for the underwater cable in the formed trench, and the underwater cable can be disposed at the touchdown point in the trench and buried at the same time.
(5) An underwater cable line according to an aspect of the present disclosure includes an underwater cable laid on a water bottom, and the underwater cable has a bent portion with a bending radius of 50 m or less.
   Since the underwater cable line of the above (5) has a bent portion with a small bending radius, it is possible to shorten the length of the underwater cable laid on the water bottom.
(6) In the underwater cable line of (5), the bent portion may detour an obstacle.

Since the underwater cable line of the above (6) has a bent portion with a small bending radius, it is possible for the underwater cable line to easily detour the obstacle.

### [Details of Embodiments of the Present Disclosure]

Hereinafter, embodiments of an underwater cable laying method and an underwater cable line according to the present disclosure will be described with reference to the drawings. The shapes, sizes, and positional relationships illustrated in the drawings are expressed for the purpose of clarifying the description, and do not necessarily represent the actual shapes, sizes, and positional relationships. In the drawings, the same reference numerals denote the same components. It should be noted that the present invention is not limited to the configuration described in the embodiments, but is defined by the scope of the claims and is intended to include all modifications within the meaning and scope equivalent to the scope of the claims.

In the embodiments, the term "water" in expressions such as "water bottom", "underwater", and "water surface" refers to "sea", "lake", or "river". In other words, the water bottom refers to a sea bottom, a lake bottom, or a river bottom; underwater means under sea, lake, or river; and the water surface refers to a sea surface, a lake surface, or a river surface.

### [First Embodiment]

### [Underwater Cable Laying Method]

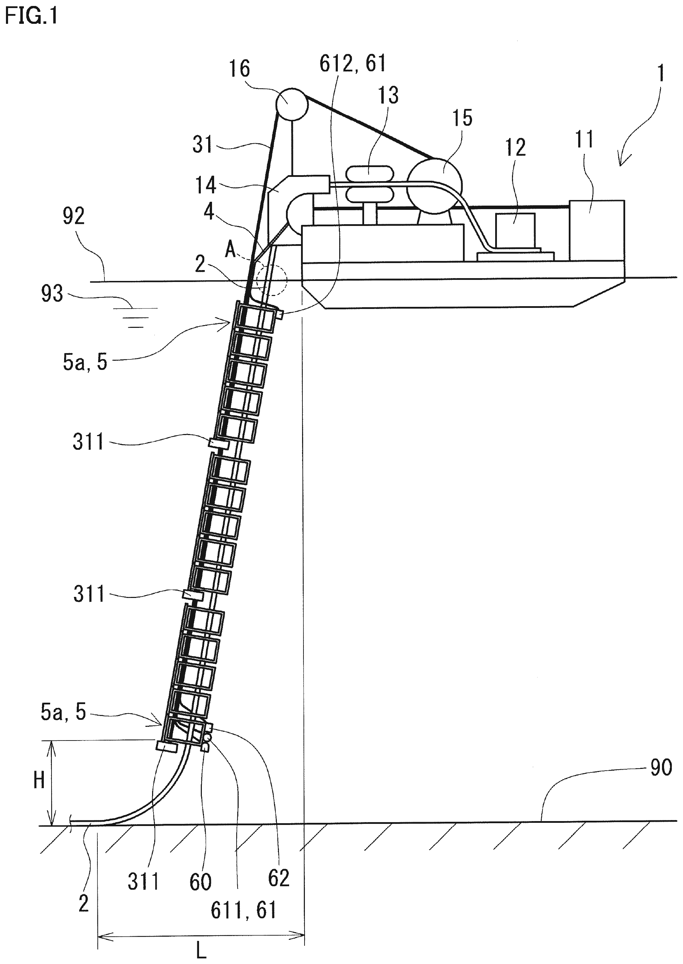

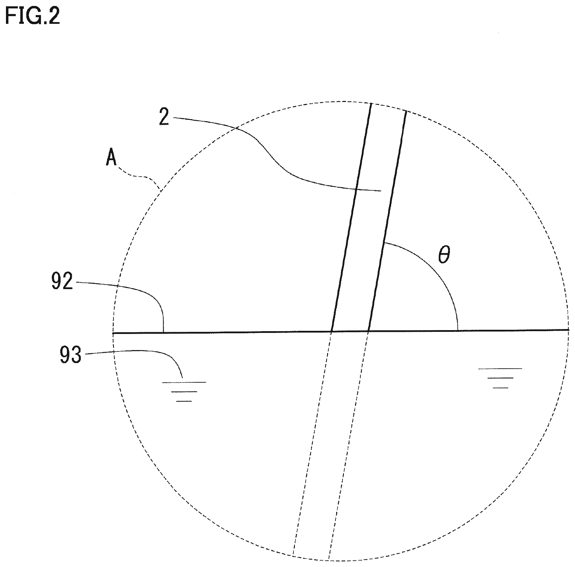

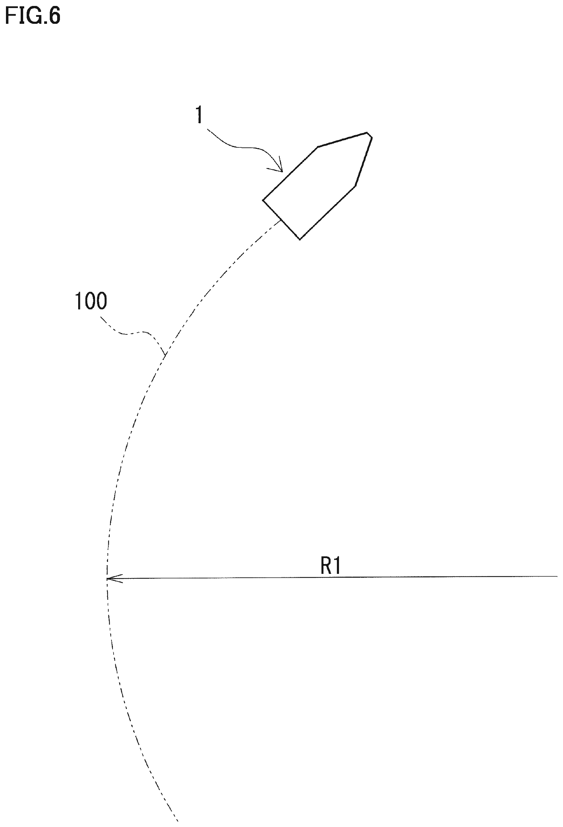

With reference to Figs. 1 to 6, an underwater cable laying method according to a first embodiment will be described. The underwater cable laying method according to the first embodiment is a method of laying, on a water bottom 90, an underwater cable 2 that electrically connects an on-land facility to an on-water facility, an on-land facility to an underwater facility, an on-water facility to another on-water facility, an underwater facility to another underwater facility, or an on-water facility to an underwater facility. The underwater cable laying method according to the first embodiment can be used to construct an underwater cable line that includes underwater cable 2 connecting these facilities. The on-land facility is, for example, an electric power substation. The on-water facility is, for example, an offshore power plant or an offshore power station. The offshore power plant is equipped with, for example, an offshore wind power generator or an offshore wave power generator. The offshore wind power generator may be a bottom-mounted wind power generator whose foundation is fixed to the sea bottom or a floating wind power generator whose foundation is anchored in the sea. The underwater facility is, for example, a subsea power plant. The subsea power plant is equipped with, for example, a tidal current power generator or an ocean current power generator. As underwater cable 2, any known underwater cable such as a dynamic cable may be used. The underwater cable laying method according to the first embodiment includes a step B of laying, on water bottom 90, underwater cable 2 mounted on a ship 1. One of the features of the underwater cable laying method according to the first embodiment is that step B includes a step B1 of drawing out underwater cable 2 from ship 1 in such a manner that a departure angle θ of underwater cable 2 with respect to a water surface 92 is a specific angle, as illustrated in Fig. 2. As illustrated in Fig. 6, the underwater cable laying method according to the first embodiment further includes a step A of navigating ship 1 along a predetermined navigation route 100.

### [Step A]

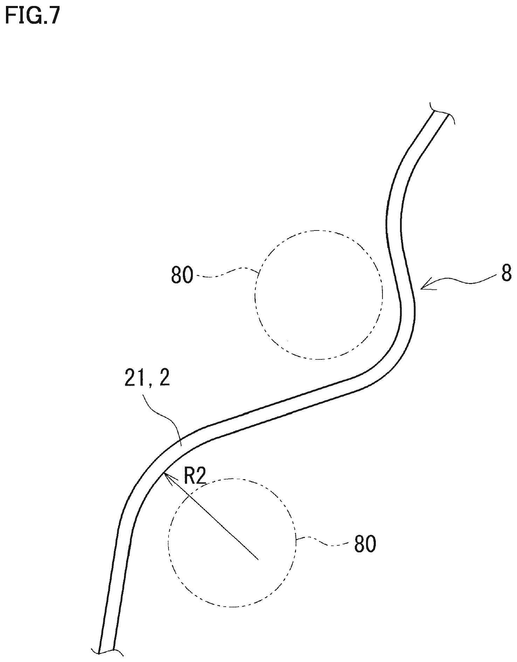

In step A, ship 1 is navigated along navigation route 100 with a turning radius R1 of 50 m or less, for example. As illustrated in Fig. 7, when turning radius R1 is 50 m or less, it is possible to easily construct an underwater cable line 8 having a bent portion 21 with a bending radius R2 of 50 m or less. Turning radius R1 may be 25 m or less or may be 10 m or less. The lower limit of turning radius R1 is equal to an allowable bending radius of underwater cable 2. The lower limit of turning radius R1 is, for example, 3 m. In other words, turning radius R1 is 3 m or more and 50 m or less, 3 m or more and 25 m or less, or 3 m or more and 10 m or less. Although not shown, ship 1 may be navigated along at least one of a navigation route with turning radius R1 of more than 50 m and a linear navigation route.

As illustrated in Fig. 1, ship 1 includes a control room 11, a cable tank 12, a brake device 13, a guide 14, a first winch 15, and a first pulley 16. Control room 11 is a room where the operation control of ship 1, the control of brake device 13, the monitoring of a touchdown point, which will be described later, the linearity monitoring of a cable guide pipe 5, and the like are performed. Control room 11 is also equipped with devices necessary for these controls. Cable tank 12 stores underwater cable 2 in a wound state. Brake device 13 adjusts the drawing speed of underwater cable 2 wound in cable tank 12, i.e., the running speed of underwater cable 2. Guide 14 guides the drawn-out underwater cable 2 to water surface 92. First winch 15 winds a first wire 31 that suspends cable guide pipe 5 (which will be described later). First pulley 16 guides first wire 31 drawn out from first winch 15 toward water surface 92. Although not shown, ship 1 includes a transceiver of an acoustic positioning device 61. The transceiver is drawn from ship 1 into water 93. The transceiver transmits signals to a first transponder 611 and a second transponder 612, which will be described later, and receives signals from first transponder 611 and second transponder 612. Acoustic positioning device 61 can acquire the three-dimensional coordinates of first transponder 611 and second transponder 612 by transmitting and receiving signals.

### [Step B]

Step B is a step of laying underwater cable 2 on water bottom 90. Step B includes a step B1 of drawing out underwater cable 2 from ship 1, and a step B2 of laying the drawn-out underwater cable 2 at a touchdown point. Step B may further include at least one of a step B3 of monitoring the touchdown point for underwater cable 2 and a step B4 of monitoring the linearity of cable guide pipe 5.

### (Step B1)

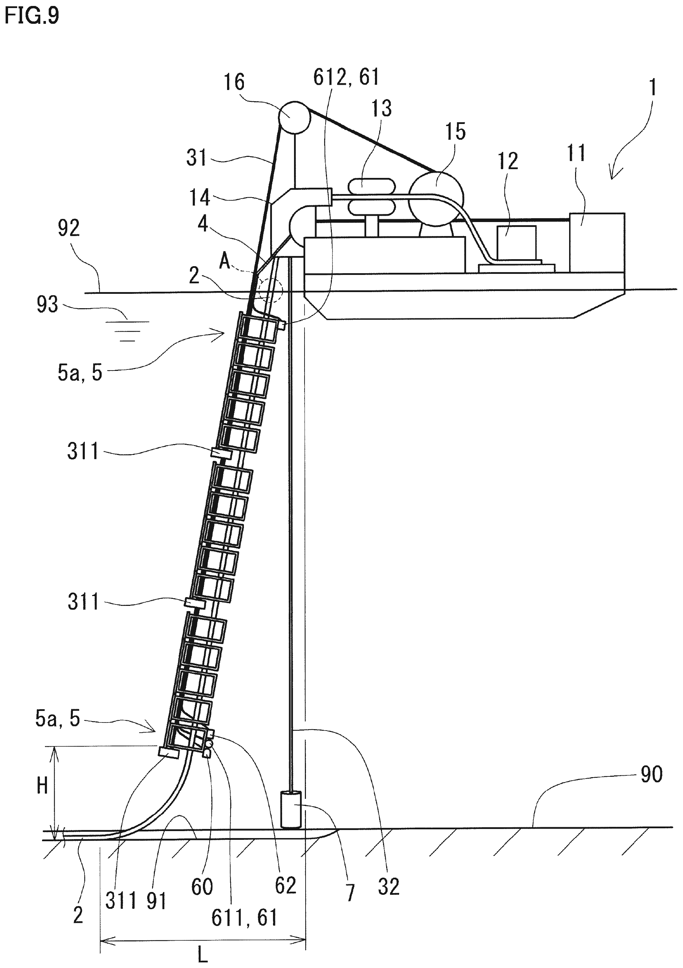

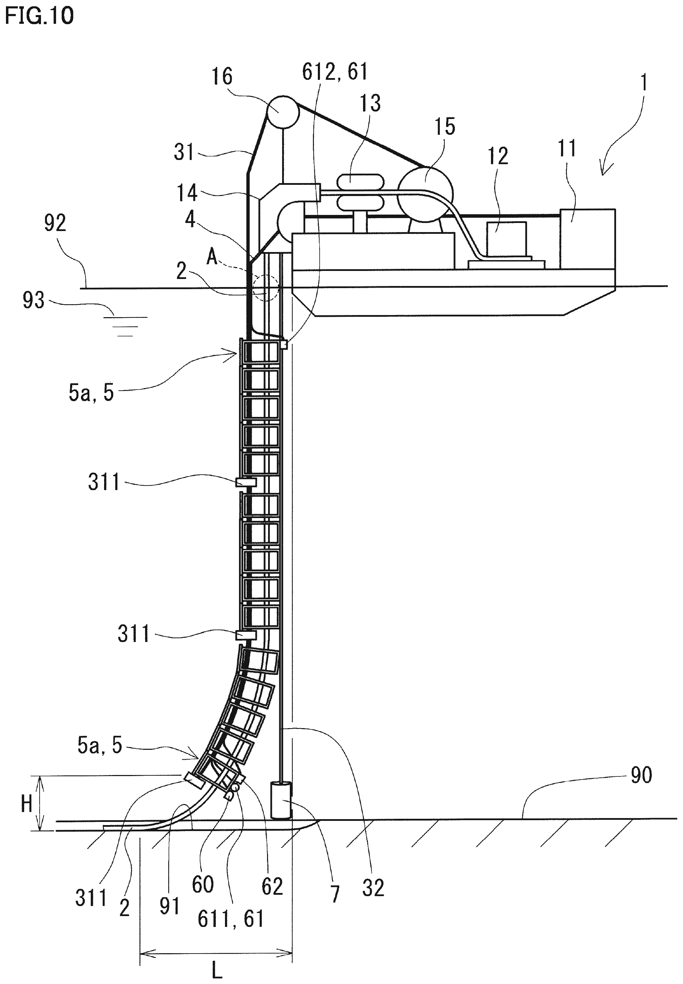

As illustrated in Fig. 2, in step B1, underwater cable 2 is drawn out from ship 1 in such a manner that departure angle θ of underwater cable 2 with respect to water surface 92 is 80° or more and 90° or less. Underwater cable 2 is drawn out from the stern. In Fig. 1, the stern is on the left side. In other words, in Fig. 1, the traveling direction of ship 1 is toward the right side. The same applies to Figs. 9 and 10 which will be described later. Departure angle θ is an angle that is formed between underwater cable 2 and water surface 92 and is closer to the stern. If departure angle θ is 80° or more, the touchdown point for underwater cable 2 can be brought closer to the stern. Therefore, as illustrated in Fig. 7, it is possible to easily construct underwater cable line 8 having a bent portion 21 with a bending radius R2 of 50 m or less. If departure angle θ is 90° or less, the bending radius of underwater cable 2 can be made equal to or larger than the allowable bending radius, and underwater cable 2 is less likely to kink. Furthermore, underwater cable 2 is less likely to contact the stern. Therefore, according to the underwater cable laying method of the present embodiment, it is possible to easily lay underwater cable 2. Departure angle θ may be, for example, 85° or more and 90° or less.

### (Step B2)

As illustrated in Fig. 1, in step B2, underwater cable 2 drawn out from ship 1 is inserted through the inside of cable guide pipe 5 disposed in water 93 and is disposed at a touchdown point for underwater cable 2. Cable guide pipe 5 is connected to first wire 31 extended from ship 1 into water 93 and is suspended in water 93. In the present embodiment, cable guide pipe 5 is connected to first wire 31 and is disposed in front of first wire 31 in the traveling direction of ship 1, in other words, on the right side thereof in the paper of Fig. 1. Since underwater cable 2 is inserted through the inside of cable guide pipe 5, underwater cable 2 is less likely to be bent to such a degree that underwater cable 2 would be damaged during the process of moving underwater cable 2 to water bottom 90. Furthermore, underwater cable 2 is less likely to kink during the process of moving underwater cable 2 to water bottom 90.

However, unlike the present embodiment, if cable guide pipe 5 is connected to first wire 31 and is disposed behind first wire 31 in the traveling direction of ship 1, in other words, on the left side thereof in the paper of Fig. 1, the following may occur. As underwater cable 2 is inserted through the inside of cable guide pipe 5, underwater cable 2 comes into contact with cable guide pipe 5, which causes cable guide pipe 5 to rotate about first wire 31 so that it is disposed from the rear side to the front side of first wire 31 in the traveling direction of ship 1. The rotated cable guide pipe 5 rubs against underwater cable 2, which damages underwater cable 2.

On the other hand, in the present embodiment, since cable guide pipe 5 is connected to first wire 31 and is disposed in front of first wire 31 in the traveling direction of ship 1, even if cable guide pipe 5 and underwater cable 2 come into contact with each other when underwater cable 2 is inserted through the inside of cable guide pipe 5, cable guide pipe 5 is prevented from rotating about first wire 31. Therefore, it is possible to prevent cable guide pipe 5 from rubbing against underwater cable 2, and thus underwater cable 2 is less likely to be damaged. In addition, since cable guide pipe 5 is prevented from rotating, it is possible to prevent the entanglement of an umbilical cable 4, which will be described later.

Cable guide pipe 5 is not connected to an excavator that excavates water bottom 90. Since cable guide pipe 5 is not connected to the excavator, it is possible to easily arrange cable guide pipe 5 in the vertical direction. Therefore, departure angle θ may be 80° or more. In addition, when ship 1 is viewed from above, cable guide pipe 5 may be easily suspended in water 93 so that a distance L between the stern of the ship and the touchdown point is short. In the present embodiment, cable guide pipe 5 is connected to first wire 31 in such a manner that distance L is 20 m or less. Therefore, as illustrated in Fig. 7, it is possible to easily construct underwater cable line 8 having bent portion 21 with bending radius R2 of 50 m or less. Distance L may be 15 m or less or may be 10 m or less. The lower limit of distance L is not particularly limited, but may be, for example, 5 m. In other words, distance L is 5 m or more and 20 m or less, 5 m or more and 15 m or less, or 5 m or more and 10 m or less.

### <Cable guide pipe>

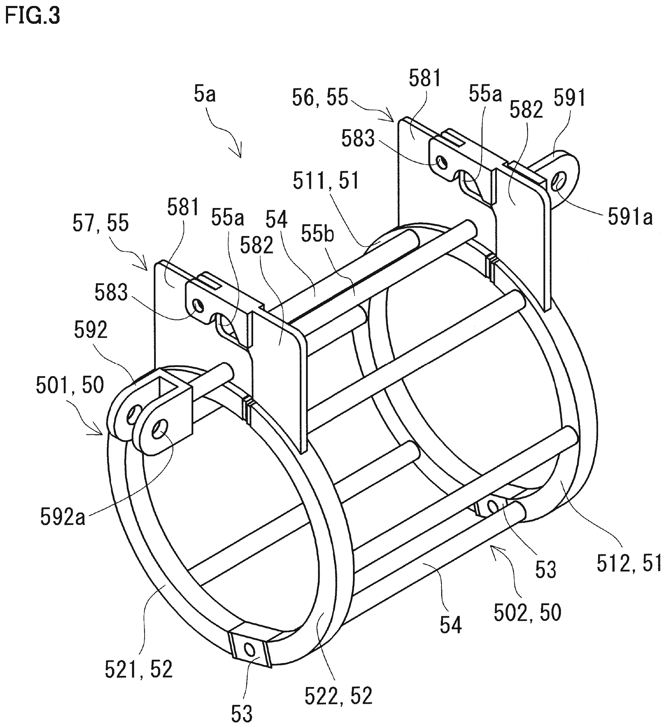

Cable guide pipe 5 includes a plurality of cylindrical cage-shaped members 5a. Each cylindrical cage-shaped member 5a is made of a metal such as steel. Each cylindrical cage-shaped member 5a may have a base portion made of a metal such as steel, and a rust-proof layer covering the surface of the base portion. The rust-proof layer prevents the base portion from being rusted. The plurality of cylindrical cage-shaped members 5a are arranged in series by first wire 31. As illustrated in Fig. 3, each of the plurality of cylindrical cage-shaped members 5a is provided with a through hole 55a through which first wire 31 illustrated in Fig. 1 is inserted. The central axis of through hole 55a is parallel to the central axis of each of the plurality of cylindrical cage-shaped members 5a. As illustrated in Fig. 1, first wire 31 has a stopper 311 for positioning the plurality of cylindrical cage-shaped members 5a by stopping or fixing the plurality of cylindrical cage-shaped members at intervals. The number of stoppers 311 is plural. The number of stoppers 311 can be appropriately selected according to the number of the cylindrical cage-shaped members 5a. If the number of stoppers 311 is one and is provided at the lower end of first wire 31, the single stopper 311 is required to support the weight of all the cylindrical cage-shaped members 5a. On the other hand, since the number of stoppers 311 is plural, each stopper 311 is only required to support the weight of the cylindrical cage-shaped member 5a disposed between adjacent stoppers 311, which reduces the load acting on each stopper 311. The number of stoppers 311 may be set to, for example, a number that that allows positioning for every five cylindrical cage-shaped members 5a. In addition to first wire 31, umbilical cable 4 illustrated in Fig. 1 may be inserted through the through hole 55a. Umbilical cable 4 is a bundle of cables that are connected to each of a camera 60, a first transponder 611, a second transponder 612, and an altimeter 62 of acoustic positioning device 61, which will be described later, and are configured to supply power and transmit and receive signals.

As illustrated in Fig. 3, each of the plurality of cylindrical cage-shaped members 5a has a main body 50 through which underwater cable 2 is inserted, and at least one protruding portion 55 extending from main body 50 in a direction away from the central axis of main body 50.

Main body 50 in the present embodiment has a base portion 501 and a door portion 502. In the present embodiment, an engagement convex 591 and an engagement concave 592 (which will be described later) are connected to base portion 501, and engagement convex 591 and engagement concave 592 are not connected to door portion 502. As to be described later, base portion 501 includes an arc-shaped first base portion 511, an arc-shaped second base portion 521, and a plurality of rod-shaped portions 54 connecting first base portion 511 and second base portion 521. Door portion 502 is connected to base portion 501 in such a manner that it can be moved to open and close main body 50. As to be described later, door portion 502 of the present embodiment includes an arc-shaped first movable portion 512, an arc-shaped second movable portion 522, and a plurality of rod-shaped portions 54 connecting first movable portion 512 and second movable portion 522. Door portion 502 allows the cylindrical cage-shaped member 5a to be fitted from a lateral side of underwater cable 2. Therefore, the cylindrical cage-shaped member 5a can be placed in water 93 by fitting the cylindrical cage-shaped member 5a on ship 1 from a lateral side of underwater cable 2 and dropping the cylindrical cage-shaped member 5a into water 93.

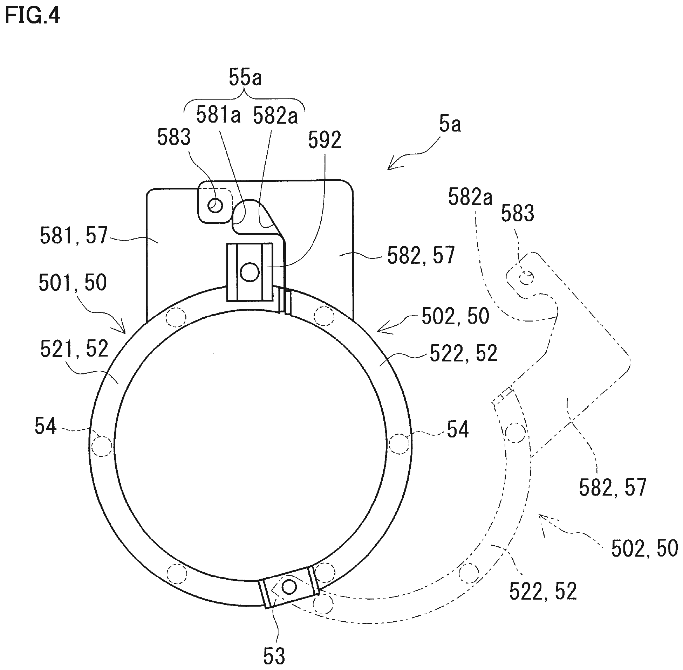

The number of protruding portions 55 may be one or more. The number of protruding portions 55 in the present embodiment is two. Each protruding portion 55 of the present embodiment is formed of a plate member. Each protruding portion 55 is provided with a through hole 55a. The two protruding portions 55 of the present embodiment are connected to each other by a rod-shaped connecting portion 55b. Each protruding portion 55 includes a first protruding piece 581 connected to base portion 501 of main body 50, and a second protruding piece 582 connected to door portion 502. Since first protruding piece 581 is connected to base portion 501 and second protruding piece 582 is connected to door portion 502, second protruding piece 582 can be opened and closed with respect to first protruding piece 581 by opening and closing door portion 502. As indicated by a solid line in Fig. 4, first protruding piece 581 and second protruding piece 582 have notches 581a and 582a facing each other when door portion 502 is closed. Through hole 55a is formed by notches 581a and 582a. A two-dot chain line in Fig. 4 indicates a state in which door portion 502 is opened. Cylindrical cage-shaped member 5a can be fitted onto first wire 31 from a lateral side thereof by opening door portion 502. In the present embodiment, the two first protruding pieces 581 are connected to each other by connecting portion 55b.

In the present embodiment, main body 50 includes a first annular portion 51, a second annular portion 52, and a plurality of rod-shaped portions 54, which will be described later. First annular portion 51 and second annular portion 52 are spaced apart from each other along the central axis of main body 50. The central axis of first annular portion 51 and the central axis of second annular portion 52 are coaxial. In the present embodiment, each of first annular portion 51 and second annular portion 52 is configured as an annular ring. However, unlike the present embodiment, each of first annular portion 51 and second annular portion 52 may be configured as a rectangular ring.

First annular portion 51 includes a first base portion 511 and a first movable portion 512. First base portion 511 in the present embodiment has an arc shape. First movable portion 512 is connected to first base portion 511 so that it can be moved to open and close first annular portion 51. First movable portion 512 in the present embodiment is connected to first base portion 511 by a hinge 53. First movable portion 512 in the present embodiment has an arc shape. Second annular portion 52 includes a second base portion 521 and a second movable portion 522. Second base portion 521 in the present embodiment has an arc shape. Second movable portion 522 is connected to second base portion 521 so that it can be moved to open and close second annular portion 52. Second movable portion 522 in the present embodiment is connected to second base portion 521 by hinge 53. Second movable portion 522 in the present embodiment has an arc shape. The position of first movable portion 512 around the central axis of first annular portion 51 is the same as the position of second movable portion 522 around the central axis of second annular portion 52. Hinge 53 that connects second base portion 521 and second movable portion 522 includes a thin-wall portion at an end of second base portion 521 and a thin-wall portion at an end of second movable portion 522. Each thin-wall portion is provided with a shaft hole. Hinge 53 is formed by overlapping the thin-wall portion of second base portion 521 and the thin-wall portion of second movable portion 522 with each other and inserting a shaft through the shaft holes of the overlapped thin-wall portions. The same applies to hinge 53 that connects first base portion 511 and first movable portion 512.

The plurality of rod-shaped portions 54 connect first annular portion 51 and second annular portion 52. The number of the rod-shaped portions 54 is not particularly limited and can be appropriately selected. The number of rod-shaped portions 54 in the present embodiment is six. One or more rod-shaped portions 54 among the plurality of rod-shaped portions 54 connect first base portion 511 and second base portion 521. One or more rod-shaped portions 54 among the plurality of rod-shaped portions 54 connect first movable portion 512 and second movable portion 522. In the present embodiment, first base portion 511 and second base portion 521 are connected to each other by three rod-shaped portions 54. Furthermore, in the present embodiment, first movable portion 512 and second movable portion 522 are connected to each other by three rod-shaped portions 54.

The two protruding portions 55 include a first protruding portion 56 extending from first annular portion 51 in a direction away from the central axis of first annular portion 51, and a second protruding portion 57 extending from second annular portion 52 in a direction away from the central axis of second annular portion 52. First protruding portion 56 and second protruding portion 57 face each other. Each of first protruding portion 56 and second protruding portion 57 is provided with a through hole 55a. The central axis of through hole 55a in first protruding portion 56 is parallel to the central axis of first annular portion 51. The central axis of through hole 55a in second protruding portion 57 is parallel to the central axis of second annular portion 52. The central axis of through hole 55a in first protruding portion 56 is coaxial with the central axis of through hole 55a in second protruding portion 57. Each of first protruding portion 56 and second protruding portion 57 includes a first protruding piece 581 and a second protruding piece 582. A through hole 583 provided in first protruding piece 581 is configured to communicate with a through hole 583 provided in second protruding piece 582 when door portion 502 is closed. A pin (not shown) is inserted into through hole 583 to maintain door portion 502 in a closed state. In the present embodiment, first protruding piece 581 and second protruding piece 582 are provided with notches 581a and 582a at diagonal positions of a substantially rectangular plate. As illustrated in Fig. 4, first protruding piece 581 is provided with a notch 581a at the upper right corner of the substantially rectangular plate, and second protruding piece 582 is provided with a notch 582a at the lower left corner of the substantially rectangular plate. When base portion 501 and door portion 502 are closed, notch 581a and notch 582a face each other to form through hole 55a.

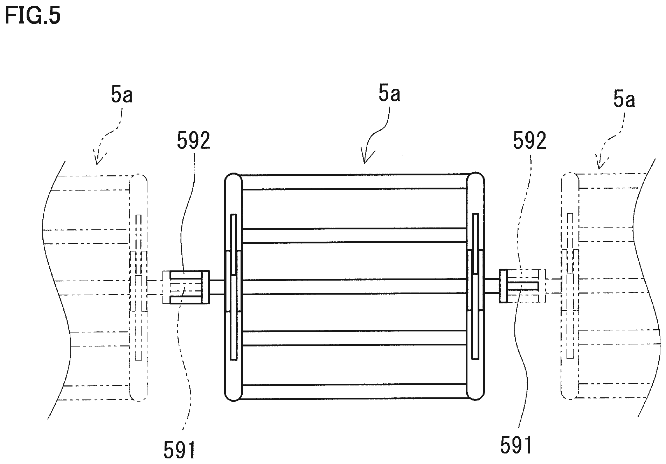

Each of the plurality of cylindrical cage-shaped members 5a may further include an engagement convex 591 and an engagement concave 592. Engagement convex 591 is connected to first protruding portion 56. Engagement convex 591 extends from first protruding portion 56 toward the opposite side to second protruding portion 57 along the central axis of through hole 55a. Engagement concave 592 is connected to second protruding portion 57. Engagement concave 592 extends from second protruding portion 57 toward the opposite side to first protruding portion 56 along the central axis of through hole 55a. Engagement concave 592 corresponds to engagement convex 591. Among the three cylindrical cage-shaped members 5a arranged in series as illustrated in Fig. 5, the cylindrical cage-shaped member 5a in the center is referred to as a first cylindrical cage-shaped member 5a, the cylindrical cage-shaped member 5a on the right side is referred to as a second cylindrical cage-shaped member 5a, and the cylindrical cage-shaped member 5a on the left side is referred to as a third cylindrical cage-shaped member 5a. Engagement concave 592 corresponds to engagement convex 591, which means that engagement convex 591 of the first cylindrical cage-shaped member 5a is engaged with engagement concave 592 of the second cylindrical cage-shaped member 5a, and engagement concave 592 of the first cylindrical cage-shaped member 5a is engaged with engagement convex 591 of the third cylindrical cage-shaped member 5a.

As illustrated in Fig. 3, engagement convex 591 in the present embodiment is constituted by a single protruding piece connected to a front edge of a rod-shaped portion connected to first protruding piece 581, and engagement concave 592 in the present embodiment is constituted by a bifurcated piece connected to a front edge of a rod-shaped portion connected to second protruding piece 582. The rod-shaped portion connected to first protruding piece 581 and the rod-shaped portion connected to second protruding piece 582 may be constituted by a member independent of connecting portion 55b or may be constituted by a part of connecting portion 55b. In the latter case, the rod-shaped portion connected to first protruding piece 581 and the rod-shaped portion connected to second protruding piece 582 may be constituted by connecting portion 55b that penetrates first protruding piece 581 and second protruding piece 582. In this case, the through hole of first protruding piece 581 and the through hole of second protruding piece 582 may be fixed to connecting portion 55b by welding or the like. As illustrated in Fig. 5, by inserting engagement convex 591 which is a protruding piece into engagement concave 592 which is a bifurcated piece, the first cylindrical cage-shaped member 5a and the second cylindrical cage-shaped member 5a are connected to each other, and the first cylindrical cage-shaped member 5a and the third cylindrical cage-shaped member 5a are connected to each other. As illustrated in Fig. 3, in the present embodiment, engagement convex 591 is provided with a through hole 591a, and engagement concave 592 is provided with a through hole 592a. Through hole 591a and through hole 592a are configured to communicate with each other when engagement convex 591 is inserted into engagement concave 592. The engagement state between engagement convex 591 and engagement concave 592 is maintained by inserting a pin (not shown) into through hole 591a and through hole 592a.

### (Step B3)

In step B3, the touchdown point for underwater cable 2 is monitored using a video from camera 60 and position information from first transponder 611 of acoustic positioning device 61. The touchdown point is a contact point between underwater cable 2 and water bottom 90. If step B3 is included, step B2 involves disposing underwater cable 2 at the touchdown point while monitoring the touchdown point for underwater cable 2. Camera 60 and first transponder 611 are attached to a lower end of cable guide pipe 5 or first wire 31, which is located near the touchdown point. Camera 60 and first transponder 611 may be directly attached to the lower end of cable guide pipe 5 or first wire 31, or camera 60 and first transponder 611 may be attached to an attachment jig (not shown) and the attachment jig may be attached to the lower end of cable guide pipe 5 or first wire 31. In the present embodiment, camera 60 and first transponder 611 are attached to the cylindrical cage-shaped member 5a disposed at a position closest to the touchdown point.

A distance from camera 60 to water bottom 90 can be determined by a video of water bottom 90 captured by camera 60. First transponder 611 can obtain three-dimensional position information of a location where first transponder 611 is attached. Therefore, the distance from the stern to first transponder 611 in both the vertical direction and the horizontal direction can be determined. First transponder 611 is attached to cable guide pipe 5 at the same height as camera 60. Since first transponder 611 is disposed at the same height as camera 60, it is possible to determine the distance from the stern to a touchdown point in the vertical direction, which is the sum of a distance from the stern to first transponder 611 in the vertical direction and a distance from first transponder 611 and camera 60 to water bottom 90.

Camera 60 and first transponder 611 can be used to continuously monitor the touchdown point. By monitoring the touchdown point, underwater cable 2 can be laid at a desired position. By determining the distance from the stern to the touchdown point in the vertical direction, underwater cable 2 can be laid in such a manner that the residual tension of the laid underwater cable 2 is within a desired range. Furthermore, underwater cable 2 can be laid in such a manner that the bending radius of underwater cable 2 at the touchdown point for underwater cable 2 is within an allowable range. Furthermore, an abnormality in the appearance of underwater cable 2 can be observed by using a video captured by camera 60. Since camera 60 is attached to the cylindrical cage-shaped member 5a disposed at a position closest to the touchdown point, a distance H between water bottom 90 and the cylindrical cage-shaped member 5a disposed at the position closest to the touchdown point can be determined. The determined distance H can be used to adjust the three-dimensional coordinates of the lower end of cable guide pipe 5.

Since the touchdown point can be monitored by using camera 60 and first transponder 611, the underwater cable laying method of the present embodiment does not require the use of a remotely operated vehicle (ROV). An ROV is limited by weather conditions. For example, under a weather condition under which an ROV cannot be used such as when the water current is fast, the laying operation must be put on hold. However, since the underwater cable laying method of the present embodiment does not use an ROV, there are fewer or no limitations on the weather conditions as compared with the case when an ROV is used. In other words, according to the underwater cable laying method of the present embodiment, it is possible to shorten or eliminate the waiting time due to the weather conditions. Furthermore, since the underwater cable laying method of the present embodiment does not use an ROV, it is possible to reduce the cost.

In step B3, the position information from altimeter 62 may be further used to determine the distance from the stern to the touchdown point in the vertical direction. Altimeter 62 is attached to, for example, a lower end of cable guide pipe 5 located near the touchdown point.

### (Step B4)

In step B4, the linearity of cable guide pipe 5 is monitored using the position information from first transponder 611 of acoustic positioning device 61 and the position information from second transponder 612 of acoustic positioning device 61. If step B4 is included, step B2 involves disposing underwater cable 2 at the touchdown point while monitoring the linearity of cable guide pipe 5. Second transponder 612 is attached to an upper end of cable guide pipe 5 or first wire 31 located in water 93 near water surface 92. The upper end of first wire 31 is located at the same height as the upper end of cable guide pipe 5 in first wire 31. Second transponder 612 may be directly attached to the upper end of cable guide pipe 5 or first wire 31, or second transponder 612 may be attached to an attachment jig (not shown) and the attachment jig may be attached to the upper end of cable guide pipe 5 or first wire 31. In the present embodiment, second transponder 612 is attached to the upper end of the cylindrical cage-shaped member 5a disposed at the position closest to water surface 92. By monitoring the linearity of cable guide pipe 5, it is possible to monitor the linearity of underwater cable 2 in cable guide pipe 5. Therefore, it is possible to determine whether underwater cable 2 in cable guide pipe 5 is subjected to a load such as excessive bending.

### [Underwater Cable Line]

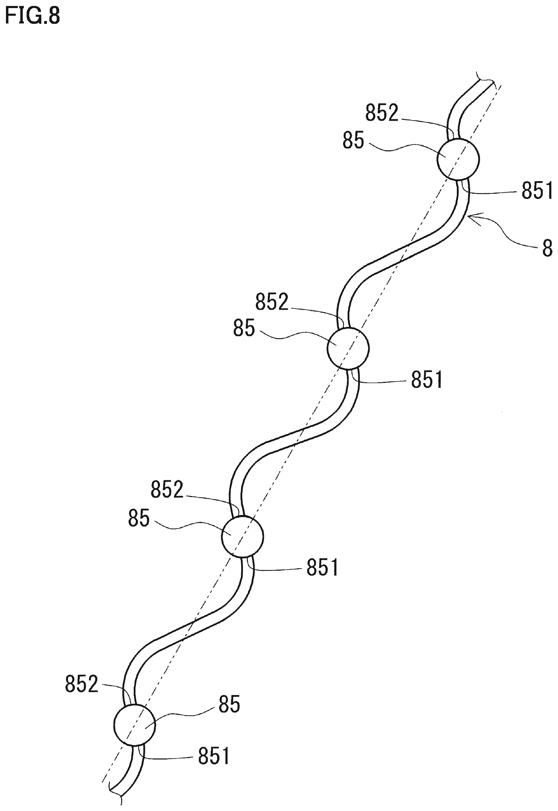

Underwater cable line 8 of the first embodiment will be described with reference to Figs. 7 and 8. Underwater cable line 8 of the first embodiment includes underwater cable 2 laid on water bottom 90. As illustrated in Fig. 7, underwater cable 2 of underwater cable line 8 has a bent portion 21 with a bending radius R2 of 50 m or less. Bending radius R2 may be 25 m or less or may be 10 m or less. The lower limit of bending radius R2 is equal to an allowable bending radius of underwater cable 2. The lower limit of bending radius R2 is, for example, 3 m. In other words, bending radius R2 is 3 m or more and 50 m or less, 3 m or more and 25 m or less, or 3 m or more and 10 m or less. Although not shown, underwater cable 2 of underwater cable line 8 may have a bent portion with a bending radius of more than 50 m or may have a linear portion. Bent portion 21 may detour an obstacle 80. Obstacle 80 may be a rock or an underwater structure. The underwater structure may be, for example, a support column 85 for an offshore wind power generator.

With reference to Fig. 8, an example in which underwater cable line 8 of the present embodiment includes underwater cable 2 that connects offshore wind power generators will be described. Fig. 8 illustrates only support column 85 for the offshore wind power generator for the convenience of explanation. Fig. 8 illustrates an example in which a plurality of columns 85 are fixed to water bottom 90 at predetermined intervals. In Fig. 8, for the convenience of explanation, a straight line passing through the centers of the plurality of support columns 85 is indicated by a two-dot chain line.

An inlet 851 and an outlet 852 provided in support column 85 for underwater cable 2 may be provided at a position of support column 85 under seawater. In this case, if inlet 851 and outlet 852 are provided on a straight line indicated by a two-dot chain line, underwater cable 2 can be laid in a straight line to connect outlet 852 of a certain column 85 to inlet 851 of an adjacent support column 85. Thus, underwater cable line 8 includes underwater cable 2 which is laid in a straight line to connect outlet 852 of a specific column 85 to inlet 851 of an adjacent support column 85. In this case, the length of underwater cable 2 of underwater cable line 8 is short. Furthermore, according to the underwater cable laying method for constructing underwater cable line 8, since underwater cable 2 that connects outlet 852 of a specific support column 85 to inlet 851 of an adjacent support column 85 is laid with a small turning radius at the waypoint, underwater cable 2 can be laid easily.

Because inlet 851 and outlet 852 may be mechanically weak points against tidal current, the position of inlet 851 and the position of outlet 852 may be configured to face a specific direction relative to the main tidal current to maximize the lifetime of support column 85. Thus, as illustrated in Fig. 8 for example, depending on the tidal current, inlet 851 and outlet 852 of each support column 85 may be provided at a respective position deviated from the two-dot chain line, and all the inlets 851 and the outlets 852 may be provided to face the same direction. In Fig. 8, an inlet 851 is provided in each support column 85, facing downward in the paper surface, and an outlet 852 is provided in each support column 85, facing upward in the paper surface. Thus, underwater cable 2 cannot be laid in a straight line from outlet 852 of a specific support column 85 toward inlet 851 of an adjacent support column 85. In other words, underwater cable 2 must be bent between outlet 852 of a specific support column 85 and inlet 851 of an adjacent support column 85. When laid in this way, underwater cable line 8 includes underwater cable 2 which has a bent portion between outlet 852 of a specific support column 85 and inlet 851 of an adjacent support column 85. Since underwater cable line 8 of the present embodiment has bent portion 21 with bending radius R2 of 50 m or less, the length of underwater cable 2 can be made relatively short. Therefore, according to the underwater cable laying method of the present embodiment for constructing underwater cable line 8 of the present embodiment, underwater cable 2 can be laid easily.

### [Second Embodiment]

### [Underwater Cable Laying Method]

With reference to Fig. 9, an underwater cable laying method according to a second embodiment will be described. The underwater cable laying method according to the second embodiment is different from the underwater cable laying method according to the first embodiment in that step B of laying underwater cable 2 further includes a step B5 of excavating water bottom 90 by excavator 7 suspended in water 93 from ship 1.

Excavator 7 is suspended by a second wire 32. Second wire 32 is an independent member from first wire 31. Although not shown, second wire 32 is wound around a second winch and is guided toward water surface 92 by a second pulley. Second wire 32 extends into water 93 at a substantially right angle to water surface 92. In other words, the departure angle of second wire 32 with respect to water surface 92 is substantially 90°. In the present embodiment, second wire 32 is spaced apart from cable guide pipe 5 in such a manner that it is not connected to cable guide pipe 5. Second wire 32 is disposed in front of cable guide pipe 5 in the traveling direction of ship 1. Excavator 7 is equipped with a sand pump. Excavator 7 equipped with a sand pump can suck up soil on water bottom 90 and discharge the sucked soil. Therefore, according to the underwater cable laying method of the present embodiment, it is possible to continuously perform the step of forming trench 91 by excavating water bottom 90, the step of laying underwater cable 2 in trench 91 at a touchdown point for underwater cable 2, and the step of burying the underwater cable 2. In other words, according to the underwater cable laying method of the present embodiment, while trench 91 is being formed by excavating water bottom 90, underwater cable 2 can be disposed at the touchdown point for underwater cable 2 in the formed trench 91, and underwater cable 2 can be disposed at the touchdown point of trench 91 and buried at the same time. The touchdown point for underwater cable 2 of the present embodiment is a contact point between underwater cable 2 and the bottom of trench 91.

### [Third Embodiment]

### [Underwater Cable Laying Method]

With reference to Fig. 10, an underwater cable laying method according to the third embodiment will be described. The underwater cable laying method according to the third embodiment is different from the underwater cable laying method according to the second embodiment in that a part of cable guide pipe 5 is connected to second wire 32 that suspends excavator 7.

In the present embodiment, cable guide pipe 5 is connected to second wire 32 at intervals from an upper end of cable guide pipe 5 to a specific point between the upper end and the lower end of cable guide pipe 5. Cable guide pipe 5 is connected to second wire 32 by, for example, a clip (not shown). Alternatively, although not shown, each cable guide pipe 5 may have an openable/closable protruding portion having a through hole through which second wire 32 is inserted. The openable/closable protruding portion is connected to base portion 501 so as not to interfere with the opening and closing of door portion 502 illustrated in Figs. 3 and 4. Cable guide pipe 5 is not connected to second wire 32 from the specific point to the lower end. According to the underwater cable laying method of the present embodiment, since a part of cable guide pipe 5 is connected to second wire 32, it is easy to bring departure angle θ of underwater cable 2 close to 90°. Furthermore, according to the underwater cable laying method of the present embodiment, distance L between the stern and the touchdown point when ship 1 is viewed from above can be easily reduced to 20 m or less. Therefore, according to the underwater cable laying method of the present embodiment, it is possible to easily construct underwater cable line 8 having bent portion 21 with bending radius R2 of 50 m or less.

### REFERENCE SIGNS LIST

1: ship; 11: control room; 12: cable tank; 13: brake device; 14: guide; 15: first winch; 16: first pulley; 2: underwater cable; 21: bent portion; 31: first wire; 311: stopper; 32: second wire; 4: umbilical cable; 5: cable guide pipe; 5a: cylindrical cage-shaped member; 50: main body; 501: base portion; 502: door portion; 51: first annular portion; 511: first base portion; 512: first movable portion; 52: second annular portion; 521: second base portion; 522: second movable portion; 53: hinge; 54: rod-shaped portion; 55: protruding portion; 55a: through hole; 55b: connecting portion; 56: first protruding portion; 57: second protruding portion; 581: first protruding piece; 581a: notch; 582: second protruding piece; 582a: notch; 583: through hole; 591: engagement convex; 591a: through hole; 592: engagement concave; 592a: through hole; 60: camera; 61: acoustic positioning device; 611: first transponder; 612: second transponder; 62: altimeter; 7: excavator; 8: underwater cable line; 80: obstacle; 85: support column; 851: inlet; 852: outlet; 90: water bottom; 91: trench; 92: water surface; 93: water; 100: navigation route; A: region; H, L: distance; R1: turning radius; R2: bending radius; θ: departure angle.

## Claims

1. An underwater cable laying method comprising a step of laying, on a water bottom, an underwater cable mounted on a ship, wherein
the step of laying the underwater cable includes:
a step of drawing out the underwater cable from the ship in such a manner that a departure angle of the underwater cable with respect to a water surface is 80° or more and 90° or less; and
a step of inserting the drawn-out underwater cable through the inside of a cable guide pipe suspended in water from the ship and disposing the underwater cable at a touchdown point for the underwater cable,
the cable guide pipe is connected to a wire extending from the ship into the water without being connected to an excavator that excavates the water bottom.

2. The underwater cable laying method according to claim 1, wherein
the cable guide pipe is connected to the wire in such a manner that a distance between the stern and the touchdown point is 20 m or less when the ship is viewed from above.

3. The underwater cable laying method according to claim 1 or claim 2, further comprising:
a step of navigating the ship along a navigation route with a turning radius of 50 m or less.

4. The underwater cable laying method according to any one of claims 1 to 3, wherein
the step of laying the underwater cable further includes a step of excavating the water bottom by using the excavator suspended in the water from the ship,
in the step of laying the underwater cable, the underwater cable is laid at a location excavated by the excavator, and
the excavator is equipped with a sand pump.

5. An underwater cable line comprising:
an underwater cable laid on a water bottom,
wherein the underwater cable has a bent portion with a bending radius of 50 m or less.

6. The underwater cable line according to claim 5, wherein
the bent portion detours an obstacle.
